# EUROPEAN PATENT APPLICATION

(11) **EP 1 367 146 A2**
(43) Date of publication of application: **03.12.2003**
(21) Application number: 03076297.5
(22) Date of filing: 01.05.2003
(51) Int. Cl.: C23C 18/04, C23C 18/12, C23C 22/78, B05D 5/10, B05D 3/10, B32B 7/12

(54) **Method of preparing a metal material for bonding**

(30) Priority: 09.05.2002 US 143391
(71) Applicant: THE BOEING COMPANY, Seattle, Washington 98124-2207 (US)
(72) Inventor: Anderson, Robert A., Federal Way, WA 98023 (US); Grace, William B.H., Seattle, WA 98115 (US); Barnes, Stephen R., Rainier, WA 98576 (US); Tillman, Matthew S., Lexington Park, Maryland 20653 (US); Blohowiak, Kay Y., Issaquah, WA 98027 (US); Arthur, Shane E., Enumclaw, WA 98022 (US); Hansen, Darrin M., Seattle, WA 98105 (US)
(74) Representative: Land, Addick Adrianus Gosling

(57) **Abstract**

A method of treating a metal material to increase the metal's ability to adhere to other objects is provided. The metal material is prepared to receive a sol-gel solution coating. A sol-gel solution is prepared and the sol-gel solution is applied to the metal material. Subsequently, an epoxy-based adhesive coating is applied over the sol-gel solution, thereby creating an adhesive layer on the metal material.

## Description

### RELATED PATENTS

The related patents are US 5,814,137 issued September 29, 1998, US 5,849,110 issued December 15, 1998, US 5,869,141 issued February 9, 1999, US 5,939,197 issued August 17, 1999, US 5,958,578, and US 6,037,060 issued March 14, 2000, all of which are incorporated by reference herein.

### RELATED APPLICATION

Additionally, this application incorporates by reference application titled "Fiber-Metal Laminate Interphase Coating" invented by Matthew S. Tillman et al.; attorney docket BOEI-1-1039.

### FIELD OF THE INVENTION

This invention relates generally to metal surface treatments and, more specifically, to a method of applying an adhesive layer to a titanium foil surface.

### BACKGROUND OF THE INVENTION

Metal treatment prior to bonding is a key factor for both the initial adhesion of a bonded joint and its long-term environmental durability. Current metal prebond surface preparations are either inconvenient or complex to use, contain hazardous materials (strong acids, hexavalent chromium, volatile organic compounds), and/or do not provide the performance necessary for successful long-term durable bonds. Past bond failures, primarily due to inadequate surface preparation, have been a limiting factor in the current use of bonded hardware, especially for primary structure.

The bonding of titanium using standard surface preparation techniques has not always been an easy or reproducible process. The very passive nature of titanium and the difficulty involved in chemical processing of titanium alloys have minimized the use of bonded titanium parts for primary or secondary structure. Several programs have used titanium bonding successfully; however, the surface preparation techniques employed are often arduous and involve hazardous chemicals and processes.

Therefore, there is an unmet need in the art for an economical and environmentally sound method of preparing metallic materials for bonding with other materials.

### SUMMARY OF THE INVENTION

The invention provides an improved method of adhering metallic materials and non-metallic materials with other metallic and non-metallic materials. A method of treating a metal surface to increase the metal's ability to adhere to other objects is provided. The metal surface is prepared to receive a sol-gel solution coating. A sol-gel solution is prepared and the sol-gel solution is applied to the metal surface. Subsequently, an epoxy-based adhesive is applied over the sol-gel coating, thereby creating an epoxy compatible adhesive layer on the metal surface.

### BRIEF DESCRIPTION OF THE DRAWINGS

The preferred and alternative embodiments of the present invention are described in detail below with reference to the following drawings.
FIGURE 1 is a flowchart of a metal laminate process according to the invention; and
FIGURE 2 is an exploded view of a metal laminate.

### DETAILED DESCRIPTION OF THE INVENTION

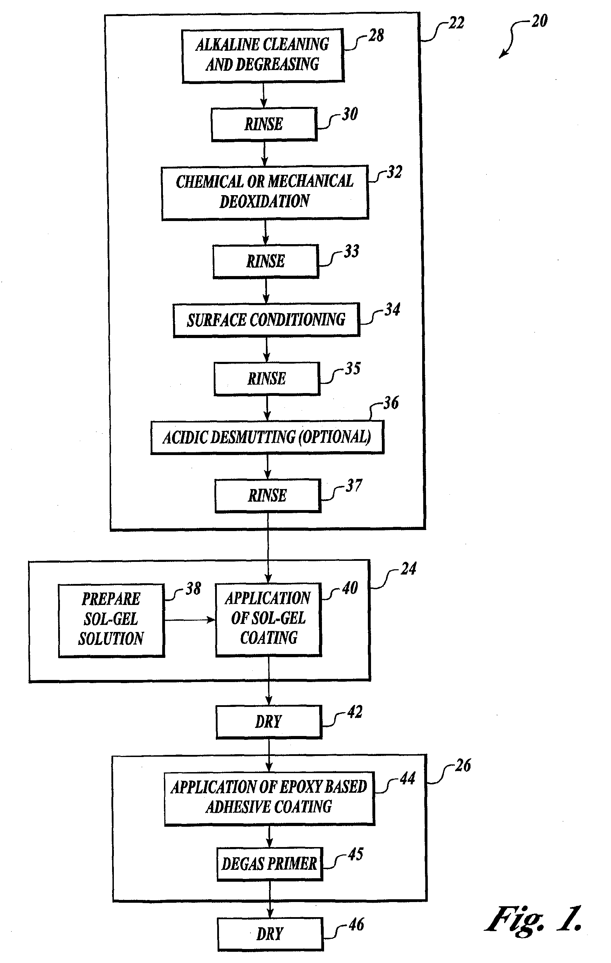

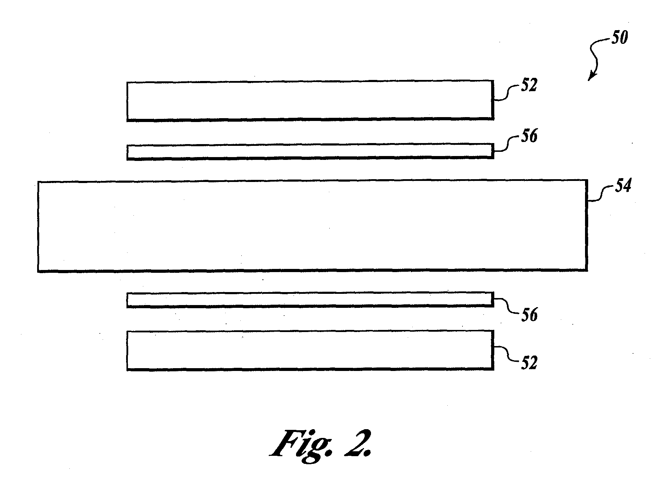

The present invention provides a method of metal surface treatment, by either batch or continuous roll process, for durably securing an adhesive layer to a metallic material. By way of overview and with reference to FIGURES 1 and 2, one presently preferred embodiment of the instant invention includes a metal-to-adhesive bond process 20 including a metal surface preparation process 22, a sol-gel preparation and application process 24 with a subsequent drying step 42, and an epoxy coating step 26 with subsequent drying step 46. Specific details of the metal-to-adhesive bond process 20 are described with more detail below.

The metallic material 54 is preferably titanium or a titanium alloy, and is more preferably a foil Ti-15V-3Cr-3Al-3Sn alloy, and is suitably less than about 0.015 inches thick. However, other metallic materials, such as, without limitation, aluminum, are within the scope of this invention. Additionally, it is anticipated that the present invention is employable with metallic material of any thickness. The process of the instant invention is preferably utilized to form titanium/graphite laminate structures. However, any other fiber/metal or metal/metal laminate such as, without limitation, a titanium/titanium laminate structure is also considered within the scope of this invention.

Referring now to FIGURES 1 and 2, a presently preferred metal-to-adhesive bond process 20 is shown in FIGURE 1. It will be appreciated that many of the steps of the metal surface preparation process 22 are well known in the art. As a result, a detailed explanation of each of the steps in the metal surface preparation process 22 is not necessary for understanding this invention.

The metal surface cleaning process 22 preferably begins with an alkaline cleaning or aqueous degreasing block 28 to remove surface contamination. Block 28 is generally concerned with initial removal of lubricating oils that may be found on the surface of the metal. It is to be understood that this block 28 is an optional step for a continuous roll method of production depending upon the condition of the metal. Alternately, the block 28 may otherwise be omitted if the metal is not greasy or oily. Then at block 32, the metal 54 receives an adequate rinse.

A block 32 deoxidizes the surface of the metal 54. More specifically, at the block 32 any metal oxide that may be formed on the surface of the metal 54 is removed. Either a chemical deoxidation process or a mechanical deoxidation process is suitably performed at the block 32. Further, either deoxidation process is suitably employable with both the batch and continuous roll process. However, it will be appreciated that the mechanical deoxidation process may be better suited to the continuous roll process than to the batch process due to the reduced use of hazardous chemicals.

Chemical deoxidation is preferably performed with an industry standard Hydrofluoric acid or Nitric acid mixture, HF and HNO₃ respectively, wherein the metal 54 is immersed in the HF/HNO₃ mixture for approximately two minutes. Conversely, mechanical deoxidation is suitably performed by either a dry-grit blast abrasion process or a wet-grit blast abrasion process. An additional rinse subsequently occurs at a block 33.

The metal 54 then receives a surface conditioning at a block 34. The metal 54 is immersed in a heated alkaline solution for approximately 5 minutes. The solution temperature range is preferably about 140 degrees Fahrenheit to about 210 degrees Fahrenheit, with a temperature of about 190 degrees Fahrenheit being optimal. In a presently preferred embodiment, the alkaline solution is a dilution of Turco 5578, resulting in an optimal 5%-50% caustic range. The table below is an example of a suitable makeup of the Turco 5578 solution employed in the present invention. At a block 35, another rinse follows the surface conditioning at the block 34.

| TURCO 5578 solution makeup per 100 gallons | | |
|---|---|---|
| **Component** | **Recommended Makeup Volume (approx. gallons)** | **Control** |
| Water | 30 | - |
| Turco 5578L | 50 | 25-35 oz./gal. |
| Water | Balance | - |
| Temperature | - | 175°F - 205°F |

If desired, an optional step of acidic desmutting at block 36 may be performed next for smut removal. In a presently preferred embodiment, acidic desmutting at the block 36 is not performed. However, depending upon the metal 54 employed, the block 36 may provide desired additional surface treatment. When the block 36 is performed, a rinse follows at block 37.

Following the metal surface preparation process 22 is the sol-gel preparation and application process 24. The sol-gel preparation and application process 24 includes preparation of the sol-gel at a block 38 and application of an aqueous solution of a sol-gel to the metal 54 at a block 40. In a presently preferred embodiment, the sol-gel is a mixture of a zirconium alkoxide such as zirconium n-propoxide, 3-glycidoxypropyltrimethoxysilane, glacial acetic acid, and a surfactant. In a presently preferred embodiment, the surfactant is suitably Antarox BL-240 from Rhodia. However, other surfactants are considered within the scope of this invention, such as, without limitation, Tomadol 91-8.

Application of sol-gel coating to the parts at the block 40 is preferably completed within about 8 hours of completion of surface preparation process 22. At block 40, the sol-gel solution is suitably applied to a part by spray-drenching the sol-gel solution onto the surface of the part. The sol-gel solution is preferably sprayed generously to the surface of the part. Excess sol-gel solution is allowed to run off the surface of the part. Preferably, part surfaces should not be allowed to dry and should be drenched with fresh sol-gel solution several times during the sol-gel solution application period. However, it will be appreciated that the surface may be dry. The coated surface is allowed to drain or excess solution is metered off with a suitable metering device, such as without limitation, matched-gap rubber rolls.

In a presently preferred embodiment, sol-gel-coated metal 54 is preferably oven dried at a block 42 under elevated temperatures for about 3 to about 6 minutes. However, it will be appreciated that exact drying time depends on the configuration of the part. As such, the drying times may be above or below the preferred range.

After the sol-gel coating is dry, the epoxy coating step 26 is performed. The epoxy coating step includes a block 44 at which an epoxy coating is applied over the sol-gel coating, preferably within 24 hours of completion of the sol-gel preparation and application 24. In a presently preferred embodiment, the epoxy coating is an epoxy-based spray adhesive.

In a presently preferred embodiment, the epoxy is applied to the sol-gel coated metal with a High Volume, Low Pressure (HVLP) spray gun. The epoxy is preferably continuous over the surface of the area to be bonded. Epoxy thickness within the bond area is preferably maintained above about 0.00065 inches. At block 45, the coating is allowed to degass under ambient conditions, preferably for a minimum time of about 30 minutes.

The metal-to-adhesive bond process 20 has been successfully tested in a batch mode and the metal-to-adhesive bond process 20 is scalable to continuous operation as well. As such, residence times obtained during batch process optimization can be used to determine processing tank size and mechanical processes formalized.

This results in the following preferable ranges for each block in the process 20:

| Block | Processing Agent | Time Range | Temperature Range | Thickness Range |
|---|---|---|---|---|
| 28 | Degrease or Clean | 0.5- 30 minutes | 75 - 200° F | N/A |
| 32 | Chemical Deoxidation | 0.5 - 10 minutes | 75 - 200° F | N/A |
| | **OR** | | | N/A |
| | 180 - 320 grit wet/dry blast | 0.1 - 10 minutes | N/A | N/A |
| 34 | Alkaline conditioner | 0.5 - 30 minutes | 75 - 200° F | N/A |
| 36 | Desmut Solution (optional) | 0.5 - 30 minutes | 75 - 200° F | N/A |
| 40 | Epoxy based Sol Gel | N/A | N/A | 0 - 0.001 inches |
| 44 | Epoxy adhesive coating | N/A | N/A | 0 - 0.005 inches |

Continuous processing of titanium foil can be achieved by using various combinations of the above steps. Continuous processing may include a roll-to-roll operation where the titanium foil runs through a cleaner, a deoxidizer (preferably a mechanical deoxidizer such as a wet grit blast), and a surface conditioner such as those described in blocks 28, 32, and 34, respectively. The titanium foil will then run through a sol-gel deposition step followed by drying of the sol-gel coating and application of the adhesive coating such as those described at the blocks 40, 42, and 26. The processed titanium foil would preferably be recoiled in a known manner for shipping to a laminate processor.

Figure 2 depicts a preferred embodiment of an epoxy-coated metal material 50 made by the metal-to-adhesive bond process 20. As illustrated, the epoxy coating 52 is present on both longitudinal sides of the metal 54. However, it will be appreciated that the epoxy coating 52 can be applied to any surface of the metal 54. Further, it is to be understood that any number of alternating layers of metal 54 and epoxy coating 52 can be made to form laminate structures of any desired strength or size.

While the preferred embodiment of the invention has been illustrated and described as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. A method for treating a metal material, the method comprising:
preparing a metal material to receive a sol-gel solution coating;
preparing a sol-gel solution;
applying the sol-gel solution to the metal material; and
applying an epoxy-based adhesive coating to the applied sol-gel solution.

2. The method of Claim 1, wherein preparing a metal material includes, cleaning the metal material with at least one of an alkaline cleaner and an aqueous degreaser.

3. The method of Claim 1, wherein preparing a metal material includes, deoxidizing the metal material with at least one of a chemical deoxidizer and mechanical deoxidizer.

4. The method of Claim 1, wherein preparing a metal material includes, conditioning the metal material.

5. The method of Claim 4, wherein conditioning the metal material includes immersing the metal material in a heated alkaline solution, the solution having a caustic concentration range of about 5% to about 50%.

6. The method of Claim 5, wherein the alkaline solution is heated to a temperature of about 140 degrees Fahrenheit to about 210 degrees Fahrenheit.

7. The method of Claim 1, further comprising at least one rinse.

8. The method of Claim 1, wherein the reagent of the sol-gel solution are a mixture of zirconium alkoxide, 3-glycidoxypropyltrimethoxysilane and a glacial acetic acid.

9. The method of Claim 8, wherein reagents of the sol-gel solution further includes a surfactant.

10. The method of Claim 1, wherein the metal material is titanium.

11. The method of Claim 10, wherein the form of the titanium is at least one of a foil, sheet, honeycomb structure and structural hardware.

12. A method of treating a metal material for increased bond strength and durability, the method comprising:
cleaning the metal material with at least one of an alkaline cleaner and an aqueous degreaser;
deoxidizing the metal material with at least one of a chemical deoxidizer and a mechanical deoxidizer;
conditioning the metal material with an alkaline solution having a caustic concentration range of about 5% to about 50%;
applying a sol-gel coating onto the metal material; and
applying an epoxy based adhesive coating over the sol-gel coating.

13. The method of Claim 12, wherein the chemical deoxidizer is at least one of a hydrofluoric acid and a nitric acid.

14. The method of Claim 12, wherein the mechanical deoxidizer is at least one of a wet grit blast and a dry grit blast process.

15. The method of Claim 12, wherein the reagents of the sol-gel solution are a mixture of zirconium alkoxide, 3-glycidoxypropyltrimethoxysilane and a glacial acetic acid.

16. The method of Claim 15, the reagents of the sol-gel solution further include a surfactant.

17. The method of Claim 12, wherein the metal material is at least one of a titanium or a titanium alloy.

18. The method of Claim 12, wherein the form of the metal material is at least one of a foil, sheet, honeycomb structure and structural hardware.

19. A metallic material, comprising:
a metal material;
a sol-gel coating adjacent the metal material; and
an epoxy based adhesive coating adjacent the sol-gel coating.

20. The metallic material of Claim 19, wherein the reagents of the sol-gel solution are a mixture of zirconium alkoxide, 3-glycidoxypropyltrimethoxysilane and a glacial acetic acid.

21. The metallic material of Claim 19, the reagents of the sol-gel solution further include a surfactant.

22. The metallic material of Claim 20, wherein the metal material is at least one of a titanium or a titanium alloy.

23. The metallic material of Claim 19, wherein the form of the metal material is at least one of a foil, sheet, honeycomb structure and structural hardware.

24. A metallic object having increased bond strength and durability, the metallic object being formed according to a process comprising:
preparing a metal material to receive a sol-gel solution coating;
preparing a sol-gel solution;
applying the sol-gel solution to the metal material; and
applying an epoxy-based adhesive coating to the applied sol-gel solution.

25. The metallic object of Claim 24, wherein preparing a metal material includes, cleaning the metal material with at least one of an alkaline cleaner and an aqueous degreaser.

26. The metallic object of Claim 24, wherein preparing a metal material includes, deoxidizing the metal material with at least one of a chemical deoxidizer and mechanical deoxidizer.

27. The metallic object of Claim 24, wherein preparing a metal material includes, conditioning the metal material.

28. The metallic object of Claim 27, wherein conditioning the metal material includes immersing the metal material in a heated alkaline solution, the solution having a caustic concentration range of about 5% to about 50%.

29. The metallic object of Claim 28, wherein the adhesive is heated to a temperature of about 140 degrees Fahrenheit to about 210 degrees Fahrenheit.

30. The metallic object of Claim 24, further comprising at least one rinse.

31. The metallic object of Claim 24, wherein the reagents of the sol-gel solution are a mixture of zirconium alkoxide, 3-glycidoxypropyltrimethoxysilane and a glacial acetic acid.

32. The metallic object of Claim 31, the reagents of the sol-gel solution further include a surfactant.

33. The metallic object of Claim 24, wherein the metal material is at least one of a titanium or a titanium alloy.

34. The metallic object of Claim 24, wherein the form of the metal material is at least one of a foil, sheet, honeycomb structure or structural hardware.
